# EUROPEAN PATENT APPLICATION

(11) **EP 4 465 547 A1**
(43) Date of publication of application: **20.11.2024**
(21) Application number: 23179384.5
(22) Date of filing: 15.06.2023
(51) Int. Cl.: H04B 7/06, H04B 7/08, H01Q 1/24, H01Q 21/28, H01Q 1/52

(54) **DYNAMIC CELLULAR ANTENNA ALLOCATION**

(30) Priority: 17.05.2023 US 202318319451
(71) Applicant: Aptiv Technologies AG, 8200 Schaffhausen (CH)
(72) Inventor: Coon, Bradley Scott, Russiaville, IN 46979 (US); Ruppel, Christopher David, Carmel, IN 46033 (US)
(74) Representative: Manitz Finsterwald Patent- und Rechtsanwaltspartnerschaft mbB

(57) **Abstract**

The methods and systems herein enable dynamic cellular antenna allocation. Respective statuses of cellular radios are first received. Each of the statuses comprise an idle status or an active status with one or more operating bands. The operating bands are then evaluated for potential interferences between each other and with one or more other radios. Based on the statuses and the potential interferences, a configuration of a switch matrix configured to connect each of a plurality of cellular antennas to either one of the cellular radios or to a termination resistor is determined. The configuration is such that antennas connected to the cellular radios with the potential interferences are physically isolated from each other and any unused cellular antennas are connected to the termination resistor. The configuration is then applied to the switch matrix such that the potential interferences may be mitigated.

## Description

### BACKGROUND

The proliferation of wireless radios in vehicles has also created a proliferation of vehicle antennas. For example, a modern vehicle may contain multiple cellular antennas, a global navigation satellite system (GNSS) antenna, a vehicle-to-everything (V2X) antenna, a Bluetooth antenna, and a Wi-Fi antenna. Groups of the antennas are often collocated for ease of packaging and cost. For example, cellular antennas (e.g., for different wireless carriers) will often be grouped with a GNSS antenna in a rooftop array. Some operating bands of the cellular antennas may cause interference with the operating bands of others of the cellular antennas and/or other collocated antennas (e.g., a GNSS antenna).

### SUMMARY

This document is directed to methods and systems for dynamic cellular antenna allocation. Some aspects described below include a method that includes receiving statuses of a plurality of cellular radios. Each of the statuses comprises an idle status or an active status with corresponding operating bands (e.g., uplink and downlink). The method also includes evaluating the operating bands of the cellular radios with the active status for potential interferences between each other and with one or more other radios and determining, based on the statuses and the potential interferences, a configuration of a switch matrix configured to connect each of a plurality of cellular antennas to either one of the cellular radios or to a termination resistor. The configuration is such that antennas connected to the radios with the potential interferences are physically isolated from each other. The method further includes applying the configuration to the switch matrix and communicating with at least one remote system using the cellular radios with the active status via their respective connected cellular antennas.

Other aspects described below include a system that includes a plurality of cellular radios, a plurality of cellular antennas, a switch matrix configured to connect each of the cellular antennas to either one of the cellular radios or to a termination resistor, at least one processor, and computer-readable storage media comprising instructions. The instructions, when executed, cause the processor to receive statuses of the cellular radios. Each of the statuses comprises an idle status or an active status with corresponding operating bands (e.g., uplink and downlink). The instructions also cause the processor to evaluate the operating bands of the cellular radios with the active status for potential interferences between each other and with one or more other radios and to determine, based on the statuses and the potential interferences, a configuration of the switch matrix. The configuration is such that antennas connected to the radios with the potential interferences are physically isolated from each other. The instructions further cause the processor to cause the switch matrix to assume the configuration.

This Summary introduces simplified concepts of dynamic cellular antenna allocation that are further described in the Detailed Description and Drawings. This Summary is not intended to identify essential features of the claimed subject matter, nor is it intended for use in determining the scope of the claimed subject matter.

### BRIEF DESCRIPTION OF THE DRAWINGS

Methods and systems of dynamic cellular antenna allocation are described with reference to the following drawings that use some of the same numbers throughout to reference like or examples of like features and components.
Fig. 1 illustrates, in accordance with this disclosure, an example environment of dynamic cellular antenna allocation.
Fig. 2 illustrates, in accordance with this disclosure, an example system for implementing dynamic cellular antenna allocation.
Fig. 3 illustrates, in accordance with this disclosure, an example interference scenario.
Fig. 4 illustrates, in accordance with this disclosure, an example configuration of a switch matrix that mitigates the interferences of Fig. 3.
Fig. 5 illustrates, in accordance with this disclosure, an example configuration of the switch matrix connecting an unused cellular antenna to a termination resistor.
Fig. 6 illustrates, in accordance with this disclosure, an example flow of determining a configuration of the switch matrix.
Fig. 7 illustrates, in accordance with this disclosure, an example method of dynamic cellular antenna allocation.

### DETAILED DESCRIPTION

### Overview

Modem vehicles may contain multiple cellular antennas, a global navigation satellite system (GNSS) antenna, a vehicle-to-everything (V2X) antenna, a Bluetooth antenna, and a Wi-Fi antenna, just to name a few. Many times, the antennas are grouped/collocated for ease of packaging and cost. For example, multiple cellular antennas (e.g., for different wireless carriers) will often be grouped with a GNSS antenna in a rooftop array.

The cellular antennas operate using respective frequency bands (e.g., operating bands) that are dynamic. Some of the operating bands can cause interference with others of the operating bands (e.g., when multiple carriers are used simultaneously) and/or with collocated antennas (e.g., a GNSS antenna, a V2X antenna). While certain techniques have been developed to mitigate potential interferences, they are often for isolated use cases. For example, filters may be used to mitigate a potential interference. Such systems, however, are unable to adapt to changing operating bands.

The methods and systems herein enable dynamic cellular antenna allocation. Respective statuses of cellular radios are first received. Each of the statuses comprise an idle status or an active status with corresponding operating bands. The operating bands of the cellular radios with the active status are then evaluated for potential interferences between each other and with one or more other radios. Based on the statuses and the potential interferences, a configuration of a switch matrix configured to connect each of a plurality of cellular antennas to either one of the cellular radios or to a termination resistor is determined. The configuration is such that antennas connected to the cellular radios with the potential interferences are physically isolated from each other and any unused cellular antennas are connected to the termination resistor. The configuration is then applied to the switch matrix such that the potential interferences are mitigated.

By using a switch matrix to connect cellular radios to respective cellular antennas, interfering antennas (cellular-cellular and/or cellular to other) may be physically separated from each other. As operating bands change, the switch matrix can also be changed to re-assign the cellular antennas to mitigate any new potential interferences. Doing so enables interference mitigation in a wide variety of environments and for a wide variety of operating bands.

### Example Environment

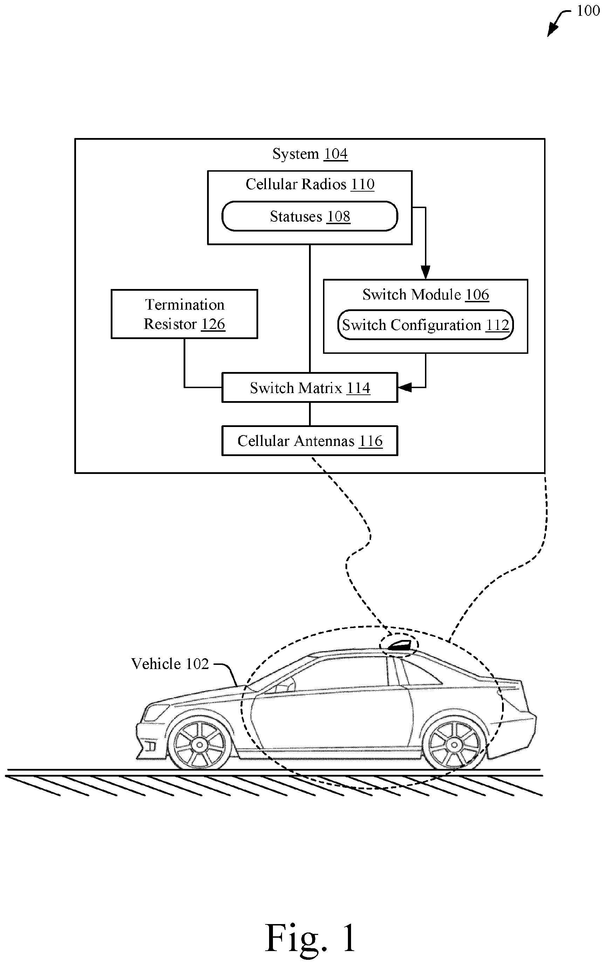

Fig. 1 illustrates an example environment 100 of dynamic cellular antenna allocation. The example environment 100 contains a vehicle 102 with a system 104. Although shown as an automobile, the vehicle 102 may be any type of object with wireless communication capability (taxi, car, truck, motorcycle, e-bike, boat, air vehicle, and so on).

The system 104 contains a switch module 106. The switch module 106, which may be implemented at least partially in hardware, is configured to receive respective statuses 108 of a plurality of cellular radios 110. The statuses 108 may comprise an idle status or an active status with corresponding operating bands that indicate uplink and downlink operating bands. To obtain the statuses 108, the cellular radios 110 may be queried by the switch module 106 or the cellular radios 110 may broadcast their statuses 108.

Based on the statuses 108, the switch module 106 is configured to determine a switch configuration 112 for a switch matrix 114. The switch matrix 114 is configured to connect each of a plurality of cellular antennas 116 (e.g., one for each of the cellular radios 110) to either one of the cellular radios 110 or to a termination resistor 126 (e.g., a 50 ohm resistor).

The switch module 106 is configured to determine the switch configuration 112 such that the cellular antennas 116 are assigned to respective cellular radios 110 with the least amount of interference between each other and other antennas that are collocated (e.g., a GNSS antenna). If a cellular antenna 116 is not being used (e.g., one of the cellular radios 110 is idle or it is an extra cellular antenna 116), then it may be connected to the termination resistor 126. Furthermore, the active cellular antennas 116 may surround the unused/idle cellular antenna 116. The termination resistor 126 creates a wave trap that may further mitigate any potential interference associated with the active cellular antennas 116. Once the switch configuration 112 has been determined/selected and applied to the switch matrix 114, the system 104 may communicate with one or more remote entities using the cellular radios 110.

In some implementations, there may be more cellular antennas 116 than cellular radios 110. In such implementations, the switch configuration 112 may enable the cellular radios 110 to connect with a subset of the cellular antennas 116. Doing so may enable more physical space between interfering antennas. Furthermore, if there is always at least one unused cellular antenna 116, there is always the wave trap (if the unused antenna is connected to the termination resistor 126). If there is no potential interference, the unused antenna(s) may simply be left open (e.g., not connected to anything).

### Example System

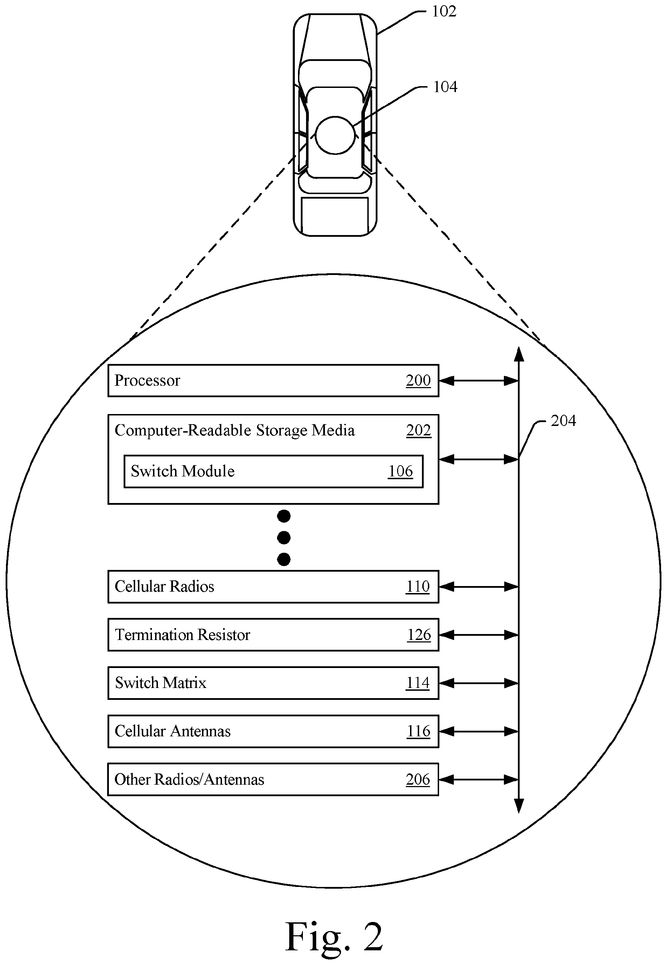

Fig. 2 illustrates an example of the system 104. Components of the system 104 may be arranged anywhere within or on the vehicle 102. The system 104 may include at least one processor 200, computer-readable storage media 202 (e.g., media, medium, mediums), the cellular radios 110, the termination resistor 126, the switch matrix 114, the cellular antennas 116, and other radios/antennas. The components are operatively and/or communicatively coupled via a link 204.

The processor 200 (e.g., application processor, microprocessor, digital-signal processor (DSP), controller) is coupled to the computer-readable storage media 202 via the link 204 and executes computer-executable instructions (e.g., code) stored within the computer-readable storage media 202 (e.g., non-transitory storage device such as a hard drive, solid-state drive (SSD), flash memory, read-only memory (ROM)) to implement or otherwise cause the switch module 106 (or a portion thereof) to perform the techniques/methods described herein. Although shown as being within the computer-readable storage media 202, the switch module 106 may be a stand-alone component (e.g., having dedicated computer-readable storage media comprising instructions and/or executed on dedicated hardware, such as a dedicated processor, pre-programmed field-programmable-gate-array (FPGA), system on chip (SOC), and the like). The processor 200 and the computer-readable storage media 202 may be any number of components, comprise multiple components distributed throughout the vehicle 102, located remote to the vehicle 102, dedicated or shared with other components, modules, or systems of the vehicle 102, and/or configured differently than illustrated without departing from the scope of this disclosure.

The computer-readable storage media 202 may also contain data (not shown). The data indicates or otherwise enables the determination of information usable to perform the techniques described herein. For example, the data may comprise the statuses 108, the switch configuration 112, and/or a look up table usable to determine the switch configuration 112.

The system 104 contains the cellular radios 110 that are configured to communicate with one or more remote entities via the cellular antennas 116. The cellular radios 110 may correspond to different wireless carriers and may be similar or different from each other.

The termination resistor 126 is configured to dissipate energy received via one or more idle antennas. The termination resistor 126 may be one or a plurality of resistors with similar or different resistances. For example, the termination resistor 126 may be a 50 ohm or similar resistor.

The switch matrix 114 may be an array or series of switches that connect the cellular antennas 116 to the cellular radios 110 or the termination resistor 126. There may be more cellular antennas 116 than cellular radios 110 or a same number. The switch matrix 114 may be able to assume any number of configurations. For example, if there are three cellular radios 110, the termination resistor 126, and three cellular antennas 116, then the switch matrix 114 may be able to assume over 20 configurations (e.g., four possible connections and three antennas).

The cellular antennas 116 may all be similar or identical to each other (e.g., in structure, composition, operating frequencies, beam pattern, array structure) such that any of the cellular radios 110 can use any of the cellular antennas 116. It should be noted that a cellular antenna 116 may be a plurality of antenna elements (e.g., one or more Tx and one or more Rx antennas). In other words, the cellular antennas 116 may be modules of antennas. The cellular antennas 116 may be collocated with each other (e.g., within ½ wavelength of each other) and with the other radios/antennas 206.

The other radios/antennas 206 may be any system or component with an antenna collocated with the cellular antennas 116. For example, the other radios/antennas may comprise a GNSS antenna or a V2X antenna. The cellular antennas 116 and the antennas of the other radios/antennas 206 may be collocated (e.g., in a rooftop antenna module).

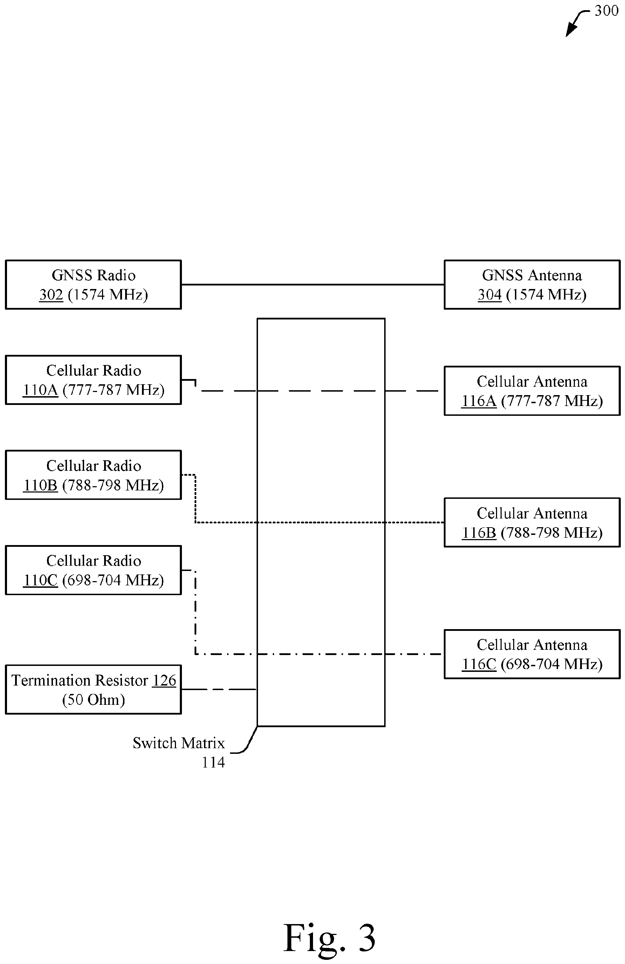

Fig. 3 illustrates, at 300, an example interference scenario mitigatable by dynamic cellular antenna allocation. The scenario includes a GNSS radio 302 connected to a GNSS antenna 304 (e.g., another radio/antenna 206). The GNSS antenna 304 is collocated with three cellular antennas 116 (e.g., cellular antennas 116A-C).

In the example scenario, cellular radio 110A is connected to cellular antenna 116A, cellular radio 110B is connected to cellular antenna 116B, cellular radio 110C is connected to cellular antenna 116C, and the termination resistor 126 is connected to none of the cellular antennas 116 (e.g., none of the cellular radios 110 are idle) via the switch matrix 114. Such a switch configuration 112 may be considered a default configuration or one with a lowest switch loss (e.g., straightest run or least number of switches).

The GNSS antenna 304 is operating with a downlink frequency of 1574 megahertz (MHz) while cellular antenna 116A is operating with an uplink band of 777-787 MHz. Cellular antenna 116B is operating with an uplink band of 788-798 and a downlink band of 758-768.

The uplink transmissions from cellular antenna 116A may cause a 2^{nd}-order intermodulation product (IM2) at the GNSS radio 302 at 1554-1574 MHz, which overlaps the 1574 MHz operating frequency of the GNSS radio 302, thus causing potential interference. Also, the uplink transmissions from cellular antenna 116A and from cellular antenna 116B may combine to produce a 3^{rd}-order intermodulation product (IM3) at 756-786 MHz (e.g., 2*F1-F2). The IM3 product overlaps the downlink transmissions from cellular antenna 116B, thus causing potential interference.

Based on the above potential interferences, it is preferable to physically separate the GNSS antenna 304 from the cellular antenna 116 operating at 777-787 MHz and to separate the cellular antennas 116 operating at 777-787 MHz and 788-798, respectively. In other words, the cellular antenna 116 for cellular radio 110A should be physically separated from the GNSS antenna 304 and from the cellular antenna 116 for cellular radio 110B.

Cellular antennas 116A and 116C may be switched (e.g., connect cellular radio 110A to cellular antenna 116C and cellular radio 110C to cellular antenna 116A) to mitigate one of the interferences (e.g., that with the GNSS). However, the other interference may still exist because the cellular antennas 116 for cellular radios 110A and 110B (e.g., cellular antennas 116B and 116C) would still be in close proximity (e.g., adjacent to each other).

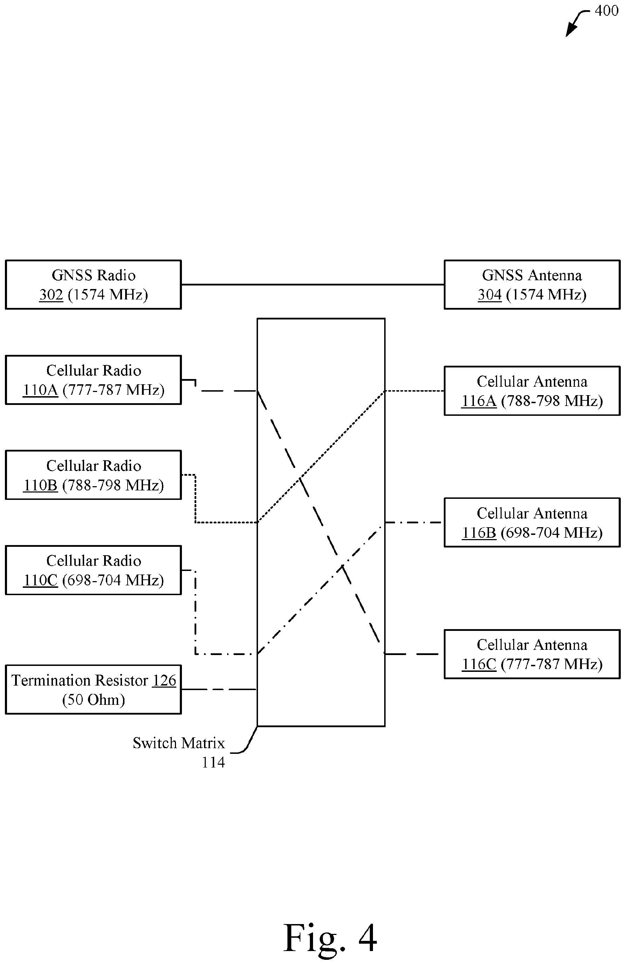

Fig. 4 illustrates, at 400, an example mitigation of the potential interferences of Fig. 3. To mitigate both potential interferences of the example scenario of Fig. 3, the switch matrix 114 may be configured such that cellular radio 110A is connected to cellular antenna 116C, cellular radio 110B is connected to cellular antenna 116A, and cellular radio 110C is connected to cellular antenna 116B. The illustrated switch configuration 112 allows the antenna of cellular radio 110A to be physically separated from the GNSS antenna 304 as well as from the antenna of cellular radio 110B. Doing so may allow for a 20 dB antenna isolation between the active antennas.

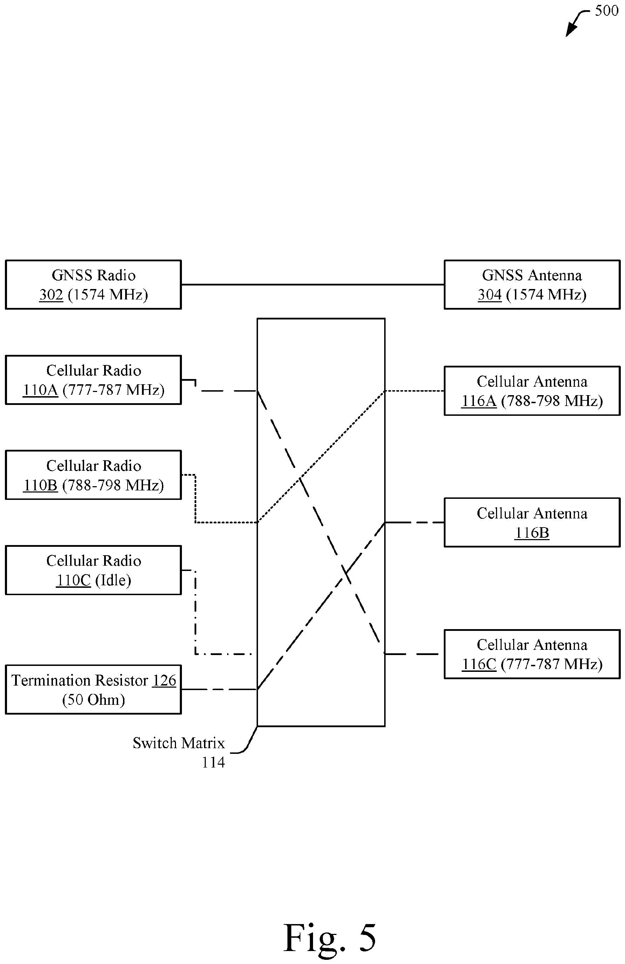

Fig. 5 illustrates, at 500, an example of a switch configuration 112 when a cellular radio 110 is idle. The scenario is similar to that of Fig. 4 but with cellular radio 110C being idle. The idle cellular radio 110C creates an idle/unused antenna (e.g., cellular antenna 116B). To create a wave trap, cellular antenna 116B is connected to the termination resistor 126. Because the cellular antenna 116B is between the interfering antennas (e.g., between the GNSS antenna 304 and the cellular antenna 116C and between the cellular antenna 116A and the cellular antenna 116C), the cellular antenna 116B/termination resistor 126 may further isolate cellular antenna 116C from the GNSS antenna and from the cellular antenna 116A. Doing so may allow for antenna isolation above 40 dB for the active radios.

### Example Flows

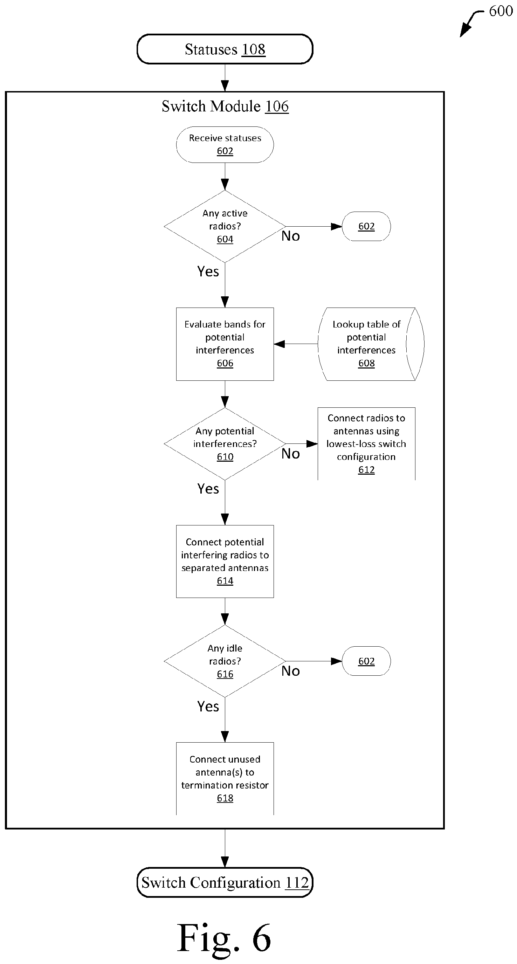

Fig. 6 is an example flow 600 of dynamic cellular antenna allocation. The example flow 600 may be implemented in any of the previously described environments and by any of the previously described systems or components. For example, the example flow 600 can be implemented in the example environment 100 and by the system 104. The example flow 600 may also be implemented in other environments, by other systems or components, and utilizing other flows or techniques. The example flow 600 may be implemented by any number of entities. The order in which the operations are shown and/or described is not intended to be construed as a limitation, and the order may be rearranged without departing from the scope of this disclosure. Furthermore, any number of the operations can be combined with any other number of the operations to implement the example flow or an alternate flow.

The example flow 600 starts with the switch module 106 receiving the statuses 108 at 602. The statuses 108 are for respective cellular radios 110. Each of the statuses 108 contains information about whether the respective cellular radio 110 is active or idle and, if it is active, what frequency band(s) it is using. For example, a status 108 may be that the corresponding cellular radio 110 is active and using band 13 (e.g., uplink at 777-787 MHz and downlink at 746-756 MHz). The status 108 may also directly indicate the associated operating bands instead of a numbered band. It should also be noted that a corresponding cellular radio 110 may be operating in multiple numbered bands (e.g., a numbered band for uplink and a different numbered band for downlink). The switch module 106 may pull the statuses 108 from the respective cellular radios 110 (e.g., query them) or the cellular radios 110 may broadcast their statuses 108.

At 604, it is determined whether any of the cellular radios 110 are active (e.g., not idle). If not, the flow stops and waits for a next status update or change of the statuses 108.

If any of the cellular radios 110 are active, the corresponding operating bands are evaluated against each other and possibly against one or more other operating bands. The other operating bands correspond to the other radios/antennas 206 that are collocated with the cellular antennas 116.

To do so, the switch module 106 may utilize a lookup table of potential interferences 608 instead of calculating the possible harmonics or intermodulation products and determining if they overlap. The lookup table of potential interferences 608 may contain information about a plurality of potential interferences between frequency bands. If there are three cellular radios 110 and a single other radio/antenna 206, then there are six possible interferences. Each combination of operating bands that produces interference may be stored within the lookup table of potential interferences 608 for quick lookup.

At 610, it is determined whether any of the operating bands have potential interferences. If not (e.g., no pair of the operating bands has a potential interference and/or entry in the lookup table of potential interferences 608), the switch module 106 may connect the cellular radios 110 to cellular antennas 116 using a lowest-loss switch configuration at 612. The lowest-loss switch configuration may be a switch configuration 112 of the switch matrix 114 where the radios/antennas are connected to each other via a least number of switches and/or shortest distances. Furthermore, the lowest-loss switch configuration may be considered a default switch configuration 112. The lowest-loss switch configuration may be used until a status update produces one or more potential interferences.

If there are potential interferences, the switch module 106 may determine a switch configuration 112 where the interfering radios are physically separated. For example, for the situation of Fig. 3, the switch configuration of Fig. 4 may be selected. It should be noted that the lowest-loss switch configuration may be selected even if there are potential interferences (e.g., if the lowest-loss switch configuration provides the necessary separation). Furthermore, a current switch configuration 112 may be maintained if it provides the necessary separation.

Next, at 616, it is determined whether any of the cellular radios 110 are idle. If not, the switch configuration 112 from 614 may stand until a next status update or the statuses 108 change.

If yes, at 618, the switch module 106 determines a switch configuration 112 where the unused cellular antenna(s) 116 are connected to the termination resistor 126. If there are multiple options for physically separating the interfering antennas, then the switch module may select a switch configuration 112 where the unused cellular antenna 116 is between the interfering antennas (e.g., the active cellular radio(s) 110 are connected to cellular antennas 116 that surround the unused cellular antenna 116.

It should be noted that steps 614 and 618 may be done simultaneously. In other words, the switch module 106 may determine the potential interferences and any idle cellular radios 110 and, in one step, determine a best switch configuration (e.g., one where the interfering antennas are physically separated from each other and any unused antennas are connected to the termination resistor 126, preferably with the unused antennas between the interfering antennas).

### Example Method

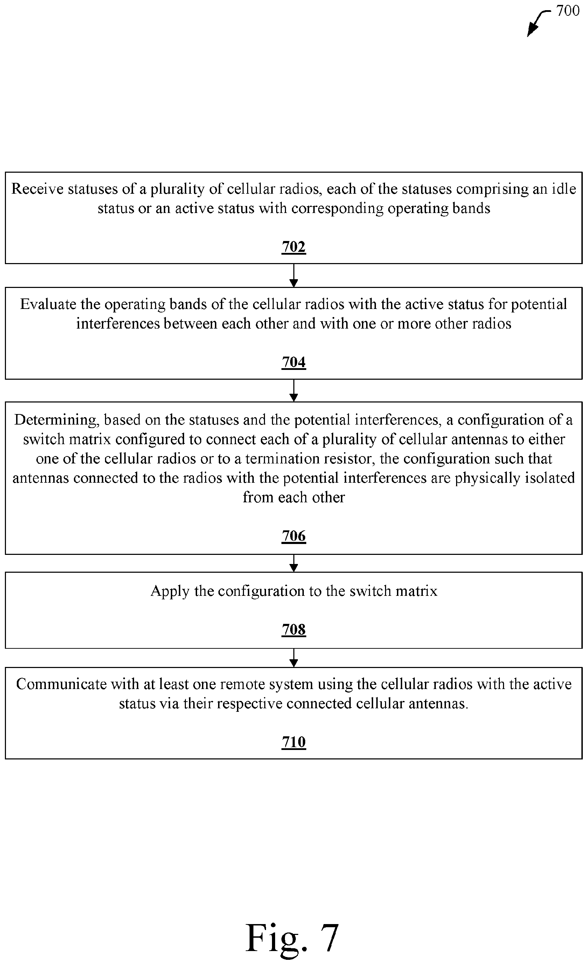

Fig. 7 is an example method 700 for dynamic cellular antenna allocation. The example method 700 may be implemented in any of the previously described environments, by any of the previously described systems or components, and by utilizing any of the previously described flows, process flows, or techniques. For example, the example method 700 can be implemented in the example environment 100, by the system 104, and/or by following the example flow 600. The example method 700 may also be implemented in other environments, by other systems or components, and utilizing other flows, process flows, or techniques. Example method 700 may be implemented by one or more entities (e.g., the switch module 106). The order in which the operations are shown and/or described is not intended to be construed as a limitation, and the order may be rearranged without departing from the scope of this disclosure. Furthermore, any number of the operations can be combined with any other number of the operations to implement the example process flow or an alternate process flow.

At 702, statuses of a plurality of cellular radios are received. Each of the statuses comprises an idle status or an active status with corresponding operating bands. For example, the switch module 106 may receive the statuses 108 from the cellular radios 110. The operating bands may comprise numbered bands indicative of uplink and downlink frequency bands. Furthermore, the operating bands may comprise uplink and downlink bands (numbered or frequency).

At 704, the operating bands of the cellular radios with the active status are evaluated for potential interferences between each other and with one or more other radios. For example, the switch module 106 may use the lookup table of potential interferences 608 to evaluate the frequency bands of the active cellular radios 110 for potential interferences.

At 706, a configuration of a switch matrix configured to connect each of a plurality of cellular antennas to either one of the cellular radios or to a termination resistor is determined based on the statuses and the potential interferences. The configuration is such that antennas connected to the radios with the potential interferences are physically isolated from each other. For example, the switch module 106 may determine the switch configuration 112, such that any interfering antennas are physically isolated from each other and that any unused cellular antennas 116 are connected to the termination resistor 126.

At 708, the configuration is applied to the switch matrix. For example, the switch module 106 may apply the switch configuration 112 to the switch matrix 114.

At 710, the cellular radios with the active status are used to communicate with at least one remote system via their respective connected cellular antennas. For example, the system 104 may communicate with a remote system using the cellular radios 110 that are active using their respective connected cellular antennas 116 (e.g., connected via the switch matrix 114 that has assumed the switch configuration 112).

### Further Examples

Some additional examples for dynamic cellular antenna allocation are provided below.

Example 1: A method comprising: receiving statuses of a plurality of cellular radios, each of the statuses comprising an idle status or an active status with one or more operating bands; evaluating the operating bands for potential interferences between each other and with one or more other radios; determining, based on the statuses and the potential interferences, a configuration of a switch matrix configured to connect each of a plurality of cellular antennas to either one of the cellular radios or to a termination resistor, the configuration such that antennas connected to the radios with the potential interferences are physically isolated from each other; applying the configuration to the switch matrix; and communicating with at least one remote system using the cellular radios with the active status via their respective connected cellular antennas.

Example 2: The method of example 1, wherein the other radios comprise a global navigation satellite system (GNSS) radio.

Example 3: The method of example 1 or 2, wherein the cellular antennas and antennas of the other radios are collocated.

Example 4: The method of example 3, wherein the cellular antennas are less than half an operating wavelength apart.

Example 5: The method of any preceding example, wherein the cellular antennas are all similar.

Example 6: The method of any preceding example, wherein the cellular radios correspond to respective wireless carriers.

Example 7: The method of any preceding example, wherein a number of the cellular antennas is equal to a number of the cellular radios.

Example 8: The method of any preceding example, wherein the operating bands of the cellular radios are variable and operating bands of the other radios are fixed.

Example 9: The method of any preceding example, wherein the configuration is such that each of the cellular antennas that are not connected to the cellular radios with the active status are connected to the termination resistor.

Example 10: The method of any preceding example, wherein the evaluating the operating bands of the cellular radios for potential interferences comprises looking up the potential interferences in a lookup table.

Example 11: A system comprising: a plurality of cellular radios; a plurality of cellular antennas; a switch matrix configured to connect each of the cellular antennas to either one of the cellular radios or to a termination resistor; at least one processor; and computer-readable storage media comprising instructions that, when executed, cause the processor to: receive statuses of the cellular radios, each of the statuses comprising an idle status or an active status with one or more operating bands; evaluate the operating bands for potential interferences between each other and with one or more other radios; determine, based on the statuses and the potential interferences, a configuration of the switch matrix, the configuration such that antennas connected to the radios with the potential interferences are physically isolated from each other; and cause the switch matrix to assume the configuration.

Example 12: The system of example 11, wherein the other radios comprise a global navigation satellite system (GNSS) radio.

Example 13: The system of example 11 or 12, wherein the cellular antennas and antennas of the other radios are collocated.

Example 14: The system of example 13, wherein the cellular antennas are less than half an operating wavelength apart.

Example 15: The system of any of examples 11-14, wherein the cellular antennas are all similar.

Example 16: The system of any of examples 11-14, wherein the cellular radios correspond to respective wireless carriers.

Example 17: The system of any of examples 11-14, wherein a number of the cellular antennas is equal to a number of the cellular radios.

Example 18: The system of any of examples 11-14, wherein the operating bands of the cellular radios are variable and operating bands of the other radios are fixed.

Example 19: The system of any of examples 11-14, wherein the configuration is such that each of the cellular antennas that are not connected to the cellular radios with the active status are connected to the termination resistor.

Example 20: The system of any of examples 11-14, wherein the evaluation of the operating bands of the cellular radios for potential interferences comprises looking up the potential interferences in a lookup table.

### Conclusion

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims.

The use of "or" and grammatically related terms indicates non-exclusive alternatives without limitation unless the context clearly dictates otherwise. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

## Claims

1. A method comprising:
receiving statuses of a plurality of cellular radios, each of the statuses comprising an idle status or an active status with one or more operating bands;
evaluating the operating bands for potential interferences between each other and with one or more other radios;
determining, based on the statuses and the potential interferences, a configuration of a switch matrix configured to connect each of a plurality of cellular antennas to either one of the cellular radios or to a termination resistor, the configuration such that antennas connected to the radios with the potential interferences are physically isolated from each other;
applying the configuration to the switch matrix; and
communicating with at least one remote system using the cellular radios with the active status via their respective connected cellular antennas.

2. The method of claim 1, wherein the other radios comprise a global navigation satellite system (GNSS) radio.

3. The method of claim 1 or 2, wherein the cellular antennas and antennas of the other radios are collocated.

4. The method of claim 3, wherein the cellular antennas are less than half an operating wavelength apart.

5. The method of any preceding claim, wherein the cellular antennas are all similar in structure.

6. The method of any preceding claim, wherein the cellular radios correspond to respective wireless carriers.

7. The method of any preceding claim, wherein a number of the cellular antennas is equal to a number of the cellular radios.

8. The method of any preceding claim, wherein the operating bands of the cellular radios are variable and operating bands of the other radios are fixed.

9. The method of any preceding claim, wherein the configuration is such that each of the cellular antennas that are not connected to the cellular radios with the active status are connected to the termination resistor.

10. The method of any preceding claim, wherein the evaluating the operating bands of the cellular radios for potential interferences comprises looking up the potential interferences in a lookup table.

11. A system comprising:
a plurality of cellular radios;
a plurality of cellular antennas;
a switch matrix configured to connect each of the cellular antennas to either one of the cellular radios or to a termination resistor;
at least one processor; and
computer-readable storage media comprising instructions that, when executed, cause the processor to:
receive statuses of the cellular radios, each of the statuses comprising an idle status or an active status with one or more operating bands;
evaluate the operating bands for potential interferences between each other and with one or more other radios;
determine, based on the statuses and the potential interferences, a configuration of the switch matrix, the configuration such that antennas connected to the radios with the potential interferences are physically isolated from each other; and
cause the switch matrix to assume the configuration.

12. The system of claim 11, wherein the other radios comprise a global navigation satellite system (GNSS) radio.

13. The system of claim 11 or 12, wherein the cellular antennas are less than half an operating wavelength apart.

14. The system of any of claims 11-13, wherein the cellular antennas are all similar in structure.

15. The system of any of claims 11-14, wherein the configuration is such that each of the cellular antennas that are not connected to the cellular radios with the active status are connected to the termination resistor.
